# EUROPEAN PATENT APPLICATION

(11) **EP 2 811 625 A1**
(43) Date of publication of application: **10.12.2014**
(21) Application number: 13425080.2
(22) Date of filing: 04.06.2013
(51) Int. Cl.: H02K 7/116

(54) **Gearmotor with reduced axial space requirement**

(71) Applicant: Brevini Power Transmission S.p.A., 42124 Reggio Emilia (RE) (IT)
(72) Inventor: Lodi, Mario, 42016 Guastalla RE (IT); Grasselli, Oddino, 42124 Reggio Emilia (IT)
(74) Representative: Modiano, Micaela Nadia

(57) **Abstract**

A gearmotor (1) with reduced axial space requirement, comprising a casing (5) for containing electrical motor elements (3) for the rotary actuation, about a longitudinal axis (A), of a driving element of an epicyclic gear system (4) provided with at least one first reduction stage (5). The first stage (5) comprises a driving sun gear (6) and a fixed ring gear (7) with which at least one planetary gear (8), coupled rotationally to an output planetary carrier (9) that rotates about the longitudinal axis (A), is simultaneously engaged. According to the invention, the electric motor elements (3) are of the brushless type and comprise a stator (10) and a rotor (11) which are mutually coupled electromagnetically, have the shape of axially hollow cylinders and are arranged coaxially to the longitudinal axis (A), the rotor (11) inside the stator (10) and axially aligned therewith. Moreover, the first reduction stage (5) is accommodated at least partially axially within the rotor (11), the sun gear (6) being associated integrally in rotation with the rotor (11) and the ring gear (7) being rigidly connected to the stator (10).

## Description

The present invention relates to a gearmotor with reduced axial space requirement.

Gearmotors are known which are used generally to transmit a rotary motion to the driving shaft of a generic user device, such as an apparatus or the like. These gearmotors consist essentially of an electric motor the driving shaft of which rotates rigidly with the input shaft of a gear train that is dimensioned appropriately so as to obtain, at the output shaft, a rotation rate and a driving torque that are adequate for the specific application.

The motor and the gear train are arranged in series in an axial direction and are connected by means of adapted flanges provided on the corresponding casings, while the driving shaft of the motor and the input shaft of the gear train are generally connected so as to be integral in rotation by means of couplings or the like.

In the field of epicyclic gear trains with one or more reduction stages, in particular, the configuration is known in which the driving shaft is connected to the input shaft, which coincides with the axis of the sun gear of the first reduction stage, which acts as the driving element of the gear train, while the ring gear is rendered integral with the casing and the planetary gears rotate about their corresponding movable axes so as to be coupled rotationally to the planetary carrier, which acts as an output element to transmit the rotation to the next stage or directly to the driving shaft of the user device.

For reducing the number of components and simplifying the overall structure, integrated gearmotors are also known in which both the motor and the gear train are accommodated within a single appropriately shaped and dimensioned casing. In this case, the driving shaft and the input shaft are integrated in a single element, so as to avoid the mechanical connection between them.

These types of gearmotors are not free from drawbacks, which include the fact that they have a significant axial space requirement, considering that the dimensions of the motor and of the gear add together in an axial direction.

This drawback is even more evident in applications in which the output shaft of the gear train must have low rotation rates, such as for example those related to the rotary actuation of cranes, wind turbine nacelles, extruders or shredders. Traditionally, electric motors are in fact designed to operate at high speeds so as not to penalize their efficiency, and therefore in order to achieve an adequate rate reduction the gear train must have multiple stages, increasing their axial space requirement. Moreover, the high rotation rate of the driving shaft can induce high noise of the gearmotor and an overall reduction in efficiency, due to the substantial generation of heat that occurs in the various stages of the gear train.

For applications requiring a low rotation rate and a high driving torque to be transmitted to the user device, in recent years brushless electric motors, also known as torque motors, have been developed which have an annular stator that supports the electrical windings and a rotor that is provided with permanent magnets and is arranged inside it, coaxially thereto and aligned axially, said stator and rotor being separated by an adapted air gap. By means of the electrical excitation of the stator, an electromagnetic field is generated which induces the rotation of the rotor without contact between the two elements. In these applications, the user device is generally connected to the rotor without the interposition of reduction stages, achieving a drastic reduction in axial space requirement with respect to the traditional configuration of an electric motor and a gear system arranged in series.

However, as the delivered driving torque increases, the cost of said brushless motors increases significantly, penalizing their possibilities of use.

The aim of the present invention is to eliminate the drawbacks cited above of the background art, providing a gearmotor with reduced axial space requirement that is compact in an axial direction, especially for applications requiring a low rotation rate and a high driving torque in output.

Within the scope of this aim, an object of the present invention is to have, in operation, low noise, reduced generation of contained heat and high efficiency.

A further object of the present invention is to be flexible in use, being applicable in various fields and with simple variations.

Another object of the present invention is to have a structure that is simple, relatively easy to provide in practice, safe to use, effective in operation and relatively low-cost.

This aim and these objects, as well as others that will become more apparent hereinafter, are all achieved by the present gearmotor with reduced axial space requirement, comprising a casing for containing electrical motor elements for the rotary actuation, about a longitudinal axis, of a driving element of an epicyclic gear system provided with at least one first reduction stage, comprising a driving sun gear and a fixed ring gear with which at least one planetary gear, coupled rotationally to an output planetary carrier that rotates about said longitudinal axis, is simultaneously engaged, **characterized in that** said electric motor elements are of the brushless type and comprise a stator and a rotor which are mutually coupled electromagnetically, have the shape of axially hollow cylinders and are arranged coaxially to said longitudinal axis, the rotor inside the stator and axially aligned thereto, and in that said first reduction stage is accommodated at least partially axially within said rotor, the sun gear being associated integrally in rotation with said rotor and the ring gear being rigidly connected to said stator.

Further characteristics and advantages of the present invention will become more apparent from the detailed description of some preferred but not exclusive embodiments of a gearmotor with reduced space requirement, illustrated by way of non-limiting example in the accompanying drawings, wherein:

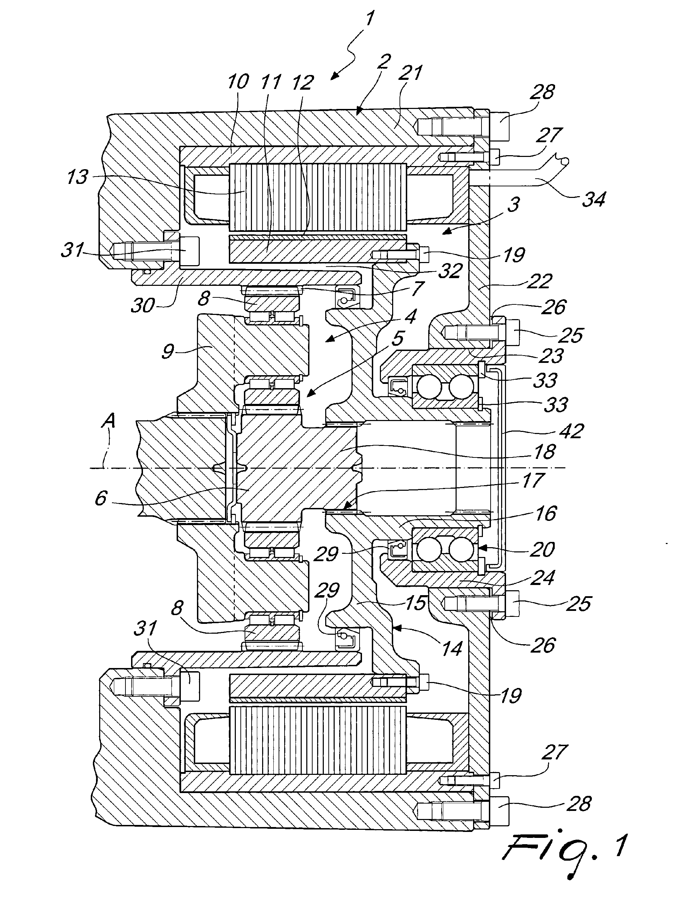

Figure 1 is a schematic axial sectional view of a first embodiment of a gearmotor with reduced space requirement according to the invention;
Figure 2 is a schematic axial sectional view of a second embodiment of the gearmotor according to the invention, derived from Figure 1;
Figure 3 is a schematic axial sectional view of a third embodiment of the gearmotor according to the invention, which constitutes a variation of Figure 2;
Figure 4 is a schematic axial sectional view of a fourth embodiment of the gearmotor according to the invention, which constitutes a variation of Figure 2;
Figure 5 is a schematic axial sectional view of a fifth embodiment of the gearmotor according to the invention;
Figure 6 is a schematic axial sectional view of a sixth embodiment of the gearmotor according to the invention, which constitutes a variation of Figure 5;
Figure 7 is a schematic axial sectional view of a seventh embodiment of the gearmotor according to the invention in a version adapted to constitute a slewing drive;
Figure 8 is a schematic axial sectional view of an eighth embodiment of the gearmotor according to the invention in a version that is adapted to constitute a wheel motor.

With particular reference to the figures cited above, the numeral 1 generally designates a gearmotor with reduced axial space requirement.

The gearmotor 1 comprises a casing 2 for containing electric motor elements 3 for the rotary actuation, about a longitudinal axis A, of a driving element of an epicyclic gear train 4 provided with at least one first reduction stage 5. Said first stage 5 is composed of a driving sun gear 6 and a fixed ring gear 7, with which at least one planetary gear 8, coupled rotationally to an output planetary carrier 9 that rotates about the longitudinal axis A, is simultaneously meshed.

The electric motor elements 3 are of the brushless type and comprise a stator 10 and a rotor 11 which are mutually coupled electromagnetically, are shaped like axially hollow cylinders and are arranged coaxially to the longitudinal axis A. The rotor 11 is arranged inside the stator 10, is coaxial thereto and axially aligned therewith. Between the stator 10 and the rotor 11 there is an adapted air gap, which allows the free rotation of said rotor about the longitudinal axis A. Permanent magnets 12 are distributed over the outside wall of the rotor 11 and an electrical winding 13 is provided on the internal wall of the stator 10 and, if supplied with electric power, generates an electromagnetic field which, by means of the interaction with the magnets 12, causes the rotation of the rotor 11. Said electric motor elements 3 are of the type known conventionally as brushless electric motor or torque motor and form an electronically switched synchronous electrical machine.

The stator 10 can be connected to an external electric power source by means of a connecting cable 34.

The first reduction stage 5 is accommodated at least partially axially within the axial cavity formed by the rotor 11; its sun gear 6 is integrally rotationally associated with said rotor and its ring gear 7 is rigidly connected to the stator 10, so as to achieve a significant reduction in the axial space requirement of the gearmotor 1.

As a function of the rotation rate and of the transmission torque required in output and of the rotation rate of the rotor 11, the gear train 4 can be dimensioned with one or more reduction stages, so that the planetary carrier 9 can be connected directly to a user device or to the sun gear of a second reduction stage or can have a particular shape and incorporate the element for transmitting rotary motion in output, as will become more apparent from the embodiments that follow.

The number of planetary gears 8 can vary depending on the specific application and in the described variations there are always four planetary gears 8 (of which only two are visible in the figures), spaced angularly in pairs by 90°.

The gearmotor 1 has connection means 14 that are interposed between the rotor 11 and the sun gear 6 and comprise a flange 15 for connection to said rotor and a rotation pivot 16 that is coaxial with the longitudinal axis A and is associated with the sun gear 6 by the interposition of a prismatic coupling 17, the flange and the pivot rotating integrally together about said longitudinal axis.

The rotation pivot 16 has a first end that is directed toward the sun gear 6, is connected to the flange 15 and is open, so as to accommodate the stem 18 of the sun gear 6 by means of the interposition of the prismatic coupling 17, and the opposite end that is free.

The flange 15, provided in one or more annular sections, is connected by means of first screws 19 to a side of the rotor 11.

The rotation pivot 16 is supported rotationally about the longitudinal axis A by the casing 2 by means of the interposition of rolling elements 20, of the type of conventional rolling bearings, by means of which the centering and rotational support of said rotation pivot, together with the sun gear 6 and the rotor 11, is achieved.

In view of the importance of ensuring a correct axial position placement of the rotor 11 with respect to the stator 10, in order to ensure optimum operation of the electric motor elements 3, the casing 2 has been provided by means of a side wall 21 that extends with an annular arrangement with respect to the longitudinal axis A, a wall 22 that is perpendicular to said axis, is adjacent to the side wall at the rotation pivot 16 and is provided with an axial hole 23 in which the free end of said pivot is inserted so as to pass through, and a sleeve 24 that is provided with a flange for connection to the wall 22, is inserted through the hole 23 and is arranged outside the rotation pivot 16. Between the inner wall of the sleeve 24 and the outer wall of the rotation pivot 16 there is a seat for accommodating the bearing 20. The axial retention of the bearing 20 is ensured in one direction by adapted shoulders formed on the rotation pivot 16 and on the sleeve 24 and in the opposite direction by retention rings 33.

The sleeve 24 can have the corresponding hole 23 closed by a protective cover 42.

The sleeve 24 is connected to the wall 22 by means of second screws 25 and adapted shims 26 can be provided between the flange of the sleeve 24 and the wall 22 in order to modify the axial position of said sleeve, together with the rotation pivot 16 and with the rotor 11 with respect to the wall 22.

Since the wall 22 is connected directly to the stator 10 by means of third screws 27 and to the side wall 21 by means of fourth screws 28, this connection system allows adjustability of the axial position of the rotor 11 with respect to the stator 10 simply by providing appropriately sized shims 26, so as to allow correct operation of the electric motor elements 3 and an optimum efficiency thereof.

It is furthermore possible to provide sealing elements 29 to prevent the seepage of the oil in which the elements of the gear train 4 are immersed toward the electric motor elements 3.

The ring gear 7 is associated with an annular jacket 30, which is arranged inside the rotor 11 and is integral with the stator 10 by means of the interposition of the side wall 21.

More precisely, the jacket 30 has a portion that protrudes axially from the rotor 11 and is connected by means of fifth screws 31 to the side wall 21, which in turn is connected rigidly to the stator 10, rendering said stator and the jacket 30 mutually fixed and mutually integral.

It is noted that in the illustrated embodiments, an empty air gap 32 is maintained between the jacket 30 and the rotor 11 arranged outside it.

However, the rotor 11 might also be supported rotationally by the stator 10. In this case the rotor 11 would be inserted snugly within the stator 10 and an antifriction element might be interposed between them; furthermore, the bearing 20 might not be provided since it might be superfluous.

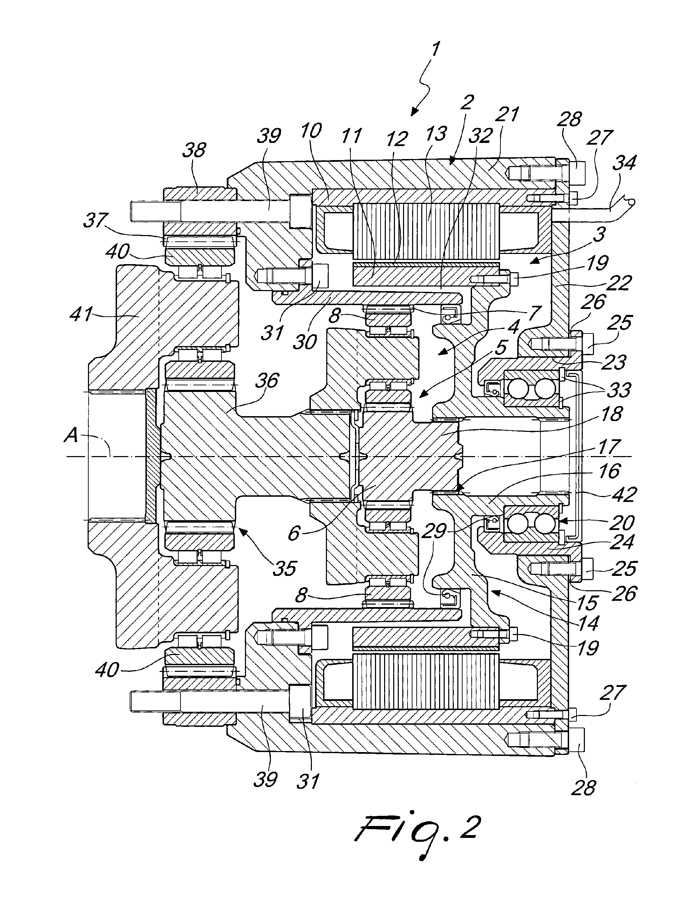

In a second embodiment, shown in Figure 2, the gearmotor 1 has a gear train 4 with two reduction stages, in which the first stage 5 is of the type described above and the second reduction stage 35 is arranged so as to protrude axially with respect to the side wall 21. Said second stage 35 has a second sun gear 36, which draws motion from the planetary carrier 9, and a second ring gear 37, which is formed inside a ring 38 that is connected to one end of the side wall 21 by means of sixth screws 39. Second planetary gears 40 mesh between the second sun gear 36 and the second ring gear 37 and are supported rotationally by the second planetary carrier 41, which acts as an output element.

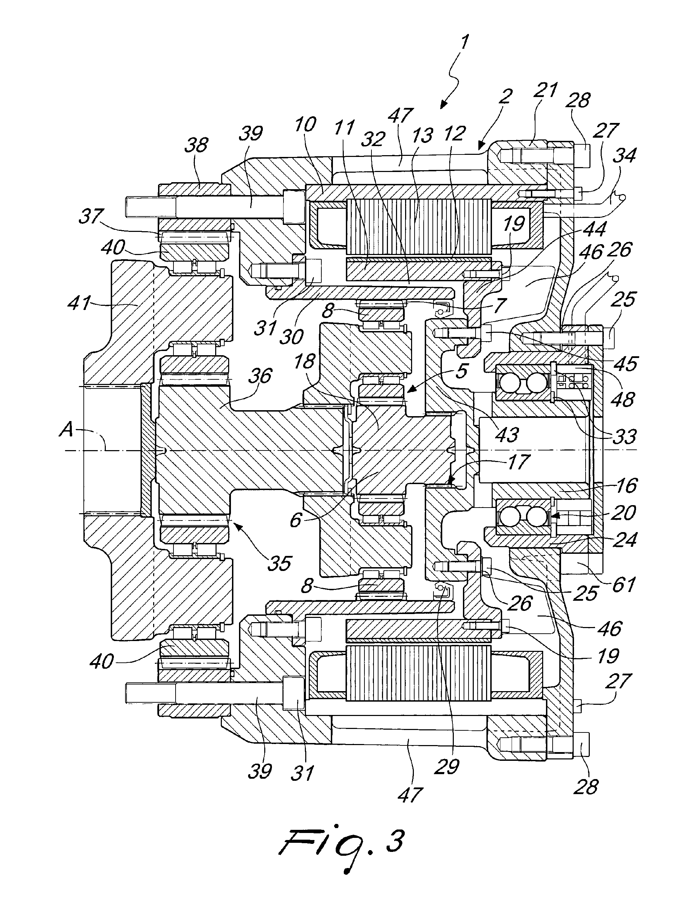

Figure 3 illustrates a variation of the embodiment of Figure 2, in which the flange 15 is formed by two annular sections 43 and 44, respectively an inner one and an outer one, which are mutually connected by means of seventh screws 45.

The outer section 44 furthermore has fins 46 which make it possible to convey cooling air toward the stator 10 so as to remove heat and increase its efficiency. In this case the side wall 21 is provided with ventilation slots 47 and the cover 42 and the wall 22 also are provided with air intake holes 61.

An angular motion transducer 48, of the type of a conventional encoder or resolver, is furthermore accommodated between the sleeve 24 and the rotation pivot 16 to control and manage the functional parameters of the electric motor elements 3.

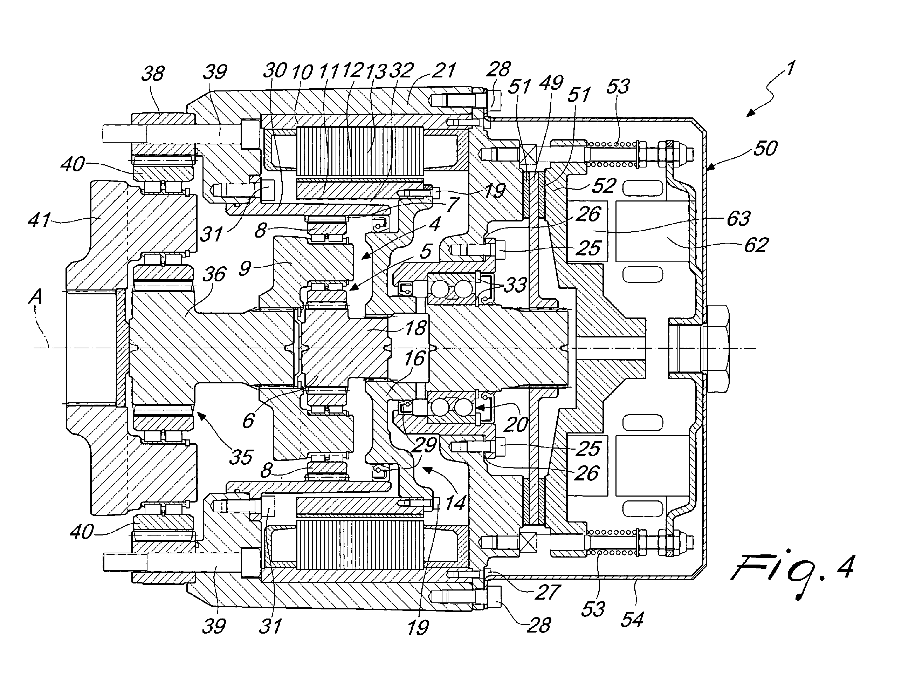

Figure 4 illustrates a further variation of the embodiment of Figure 2, which is not provided with the cover 42 and in which the free end of the rotation pivot 16 protrudes beyond the wall 22 and is coupled to a braking disk 49 and to an electromagnetic braking assembly 50, which is briefly described hereinafter since it is the type of a conventional safety brake that is activated if the electric power is interrupted and is known to the person skilled in the art.

Said braking assembly 50 is provided with friction elements 51, which are interposed between the wall 22 and one side of the disk 49 and between the opposite side of said disk and a pusher 52, which can move in an axial direction between an inactive configuration and a braking configuration, which is closer to the disk 49. The axial translation of the pusher 52 toward the disk 49 is actuated by the compression springs 53 if the electric power supply is interrupted, whereas retention of the inactive configuration is ensured by an electromagnetic ring 62, which, if supplied with electric power, attracts a metallic ring 63 that is integral with the pusher 52.

The braking assembly 50 is enclosed by a protective shell 54 that is connected to the wall 22 again by means of the fourth screws 28 and supports the electromagnetic ring 62.

According to this embodiment, therefore, the gearmotor 1 can also integrate a braking assembly 50, extending the possibilities of use of said gearmotor.

It is noted that the solutions constituted by the fins 46, by the transducer 48 and by the braking assembly 50 described above can be provided in a gearmotor according to the invention independently of each other and regardless of the number of reduction stages that constitute the gear train 4.

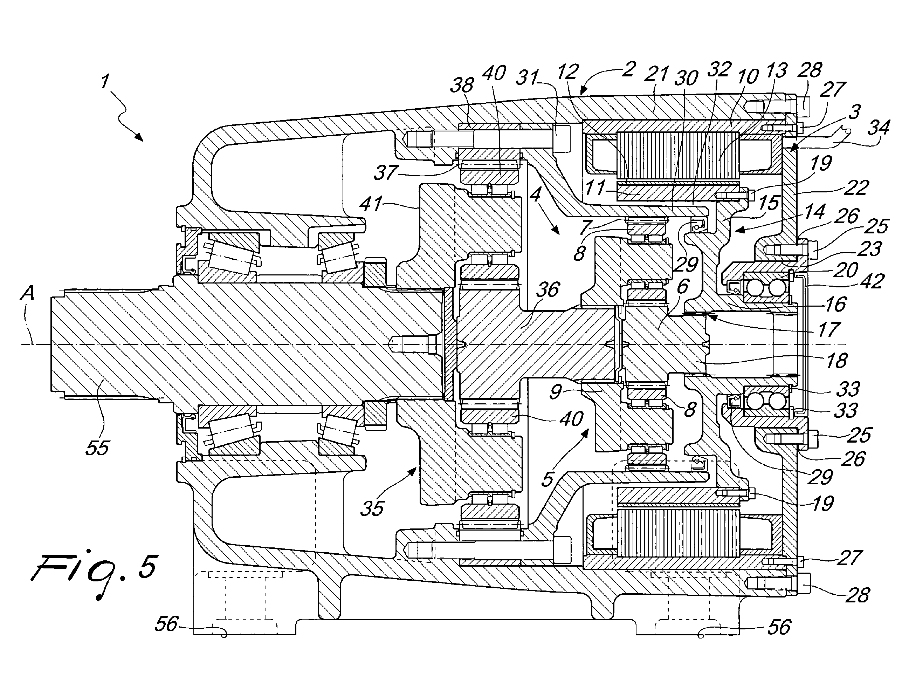

Figure 5 illustrates a further variation of the second embodiment Figure 2, in which an output shaft 55 designed for connection to a user device is keyed to the second planetary carrier 41.

In this case, the side wall 21 is extended so as to also enclose the second reduction stage 35 and the jacket 30 is shaped at one end so that the same fifth screws 31 pass through an edge of said jacket and the ring 38, connecting them both to the side wall 21.

The casing 2 is provided with feet 56, but it might also be shaped differently on the outside depending on the requirements of the specific application.

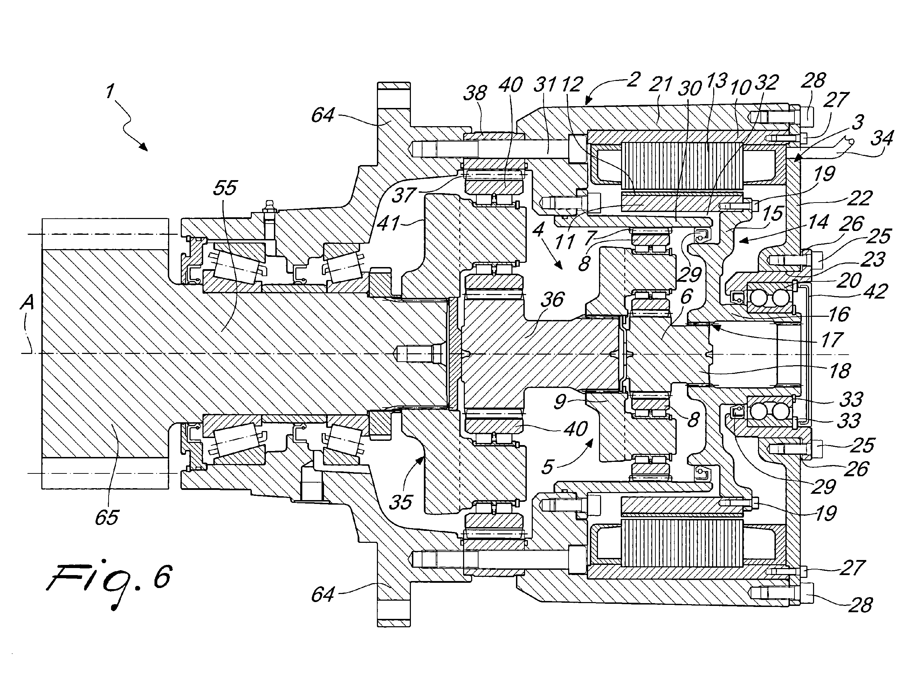

For example, Figure 6 shows a variation of the preceding embodiment in which the casing 2 does not have the feet 56 but is provided with a coupling flange 64 for connection to a user assembly by means of threaded elements, not shown, and the output shaft 55 is provided at the head with a pinion 65 for transmitting rotation to said user assembly.

This embodiment of the gearmotor 1 is particularly suitable for the rotary actuation of wind turbine nacelles, since in this application it is necessary to contain the axial space requirement due to the limited space available.

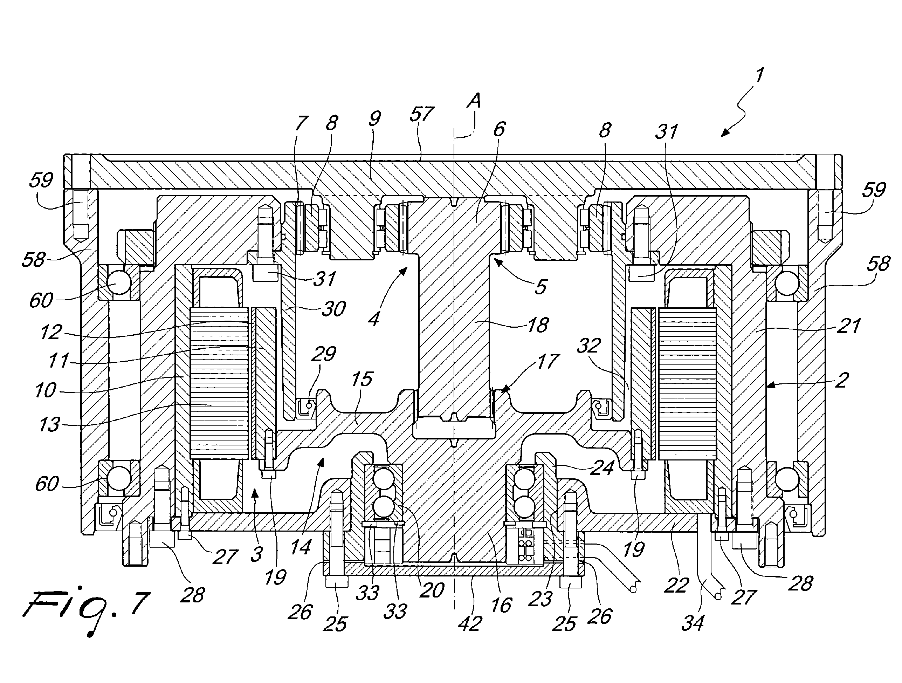

Figure 7 illustrates a further embodiment, in which the gearmotor 1 performs the function of a slew driver and is preset to be arranged so that the longitudinal axis A is in a vertical position.

In this case, the gear train 4 has only the first reduction stage 5 and the sun gear 6 has an elongated stem 18, so as to arrange the toothed head in a position that protrudes axially with respect to the electric motor elements 3. The planetary carrier 9 is shaped so as to form a platform 57 that rotates about the longitudinal axis and is adapted to be arranged at the top.

Conveniently, the platform 57 has a larger diameter than the side wall 21 and is connected perimetrically, by means of eighth screws 59, to a cylindrical wall 58 that is arranged externally with respect to said side wall. Bearings 60 are provided between the cylindrical wall 58 and the side wall 21 so as to support the platform 57 in rotation.

In this version, which is particularly suitable for the orientation of photovoltaic panels, it is advantageous to be able to provide the transducer 48 on board the gearmotor 1 so as to be able to obtain precise control of the angular position of the platform 57.

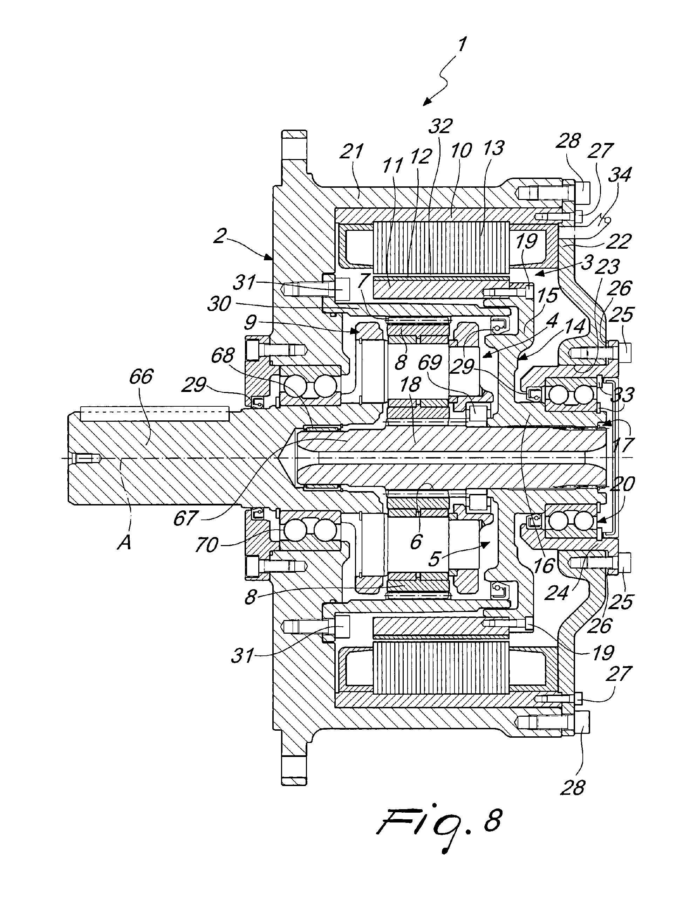

In a further embodiment, shown in Figure 8, the gearmotor 1 performs the function of a conventional wheel gearmotor or motor wheel.

The gear train 4 has a single reduction stage 5, in which the planetary carrier 9 is of the type with a double wing and is extended with a pivot 66 that protrudes from the casing 2 and rotates about the longitudinal axis A, which acts as a hub for the keying of the rim of a tire.

The sun gear 6 has, on the opposite side of the stem 18, a protruding shank 67 which is inserted within the pivot 66 by means of the interposition of a roller bearing 68. Moreover, there is an additional roller bearing 69 that is interposed between the stem 18 and the planetary carrier 9 and a second ball bearing 70 that is interposed between the pivot 66 and the casing 2 to rotationally support said pivot. In this application also, the use of a gearmotor according to the invention makes it possible to minimize axial space requirements.

In practice it has been found that the described invention achieves the intended aim and objects, and in particular the fact is stressed that the gearmotor according to the invention allows a significant reduction in axial space occupation with respect to conventional gearmotors, in which the motor elements and the gear train are arranged in series in an axial direction, and an optimization of the concept of integration between the motor elements and the gear system.

Furthermore, the low rotation rate transmitted by brushless electric motor elements allows a reduction in noise and heat dissipation.

Last but not least, the principle of integration of a brushless electric motor with a reduction unit of the epicyclic type incorporated in the present invention lends itself to multiple variations and developments linked to various industrial applications, as exemplified by the embodiments described above.

The invention thus conceived is susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements without thereby abandoning the protective scope of the claims that follow.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A gearmotor (1) with reduced axial space requirement, comprising a casing (5) for containing electrical motor elements (3) for the rotary actuation, about a longitudinal axis (A), of a driving element of an epicyclic gear system (4) provided with at least one first reduction stage (5), comprising a driving sun gear (6) and a fixed ring gear (7) with which at least one planetary gear (8), coupled rotationally to an output planetary carrier that rotates about said longitudinal axis (A), is simultaneously engaged, **characterized in that** said electric motor elements (3) are of the brushless type and comprise a stator (10) and a rotor (11) which are mutually coupled electromagnetically, have the shape of axially hollow cylinders and are arranged coaxially with said longitudinal axis (A), the rotor (11) inside the stator (10) and axially aligned thereto, and **in that** said first reduction stage (5) is accommodated at least partially axially within said rotor (11), the sun gear (6) being associated integrally in rotation with said rotor (11) and the ring gear (7) being rigidly connected to said stator (10).

2. The gearmotor (1) according to claim 1, **characterized in that** it comprises connection means (14) which are interposed between said rotor (11) and said sun gear (6) and comprise a flange (15) for connection to said rotor (11) which is integral with a rotation pivot (16) which is coaxial with said longitudinal axis (A) and is associated with said sun gear (6) by means of the interposition of a prismatic coupling (17), the rotation pivot (16) being supported rotationally by said casing (2) by means of the interposition of rolling elements (20).

3. The gearmotor (1) according to claim 2, **characterized in that** said casing (2) comprises a wall (22) provided with a hole (23) in which the free end of said rotation pivot (16) is inserted so as to pass through and a sleeve (24) associated with said wall (22), a seat for accommodating said rolling elements (20) being formed between the sleeve (22) and the rotation pivot (16).

4. The gearmotor (1) according to claim 3, **characterized in that** said sleeve (24) is provided with a flange for abutment against said wall (22), elements (26) with variable thickness being arrangeable between the flange of the sleeve and said wall so as to obtain the adjustability of the axial position of the sleeve (24) and, with it, of the rotor (11) through the connecting means (14).

5. The gearmotor (1) according to claim 3 or 4, **characterized in that** it comprises transducer means (28) for angular movement which are accommodated between said rotation pivot (16) and said sleeve (24).

6. The gearmotor (1) according to one or more of the preceding claims, **characterized in that** it comprises fins for ventilation of said stator (10) which is integral with said connecting means (14).

7. The gearmotor (1) according to one or more of the preceding claims, **characterized in that** said free end of said rotation pivot (16) is associated with a braking assembly (50).

8. The gearmotor (1) according to one or more of the preceding claims, **characterized in that** said ring gear (7) is associated within a jacket (30) that is integral with said stator (10) through said casing (2), which is arranged coaxially inside said rotor (11).

9. The gearmotor (1) according to claim 8, **characterized in that** an annular space (32) is provided between said rotor (9) and said jacket (30), the rotor (9) being supported rotationally by the casing (2) by interposition of rolling elements (20) thanks to the connecting means (14).

10. The gearmotor (1) according to claim 8, **characterized in that** said rotor (9) is supported rotationally by said jacket (30).

11. The gearmotor (1) according to one or more of the preceding claims, **characterized in that** said gear train (4) comprises a reduction stage (5) and **in that** said planetary carrier (9) is shaped so as to form a platform (57) that rotates about said longitudinal axis (A).

12. The gearmotor (1) according to one or more of claims 1 to 10, **characterized in that** said gear train (4) comprises a reduction stage (5) and **in that** said planetary carrier (9) is shaped so as to form a pivot (66) that protrudes from said casing (2) and rotates about said longitudinal axis (A), with which a rim of a tire can be associated.

13. The gearmotor (1) according to one or more of claims 1 to 10, **characterized in that** said gear train (4) comprises at least one second reduction stage (35) downstream of said first reduction stage (5) accommodated within a single casing (2).
